(19) Europäisches Patentamt
European Patent Office
Office européen des brevets

(11) Publication number: 0 211 983 B1

# (12) EUROPEAN PATENT SPECIFICATION

(45) Date of publication of the patent specification: **04.07.90**

(51) Int. Cl.[5]: **B01J 47/00**, B01J 39/02

(21) Application number: **85110334.1**

(22) Date of filing: **19.08.85**

(54) **Crystalline 3-layer lithium aluminates.**

(43) Date of publication of application: **04.03.87 Bulletin 87/10**

(45) Publication of the grant of the patent: **04.07.90 Bulletin 90/27**

(84) Designated Contracting States: **DE FR GB**

(56) References cited:
**EP-A- 0 103 034**
**US-A- 4 116 856**
**US-A- 4 348 295**
**US-A- 4 540 509**

(73) Proprietor: **THE DOW CHEMICAL COMPANY, 2030 Dow Center Abbott Road P.O. Box 1967, Midland Michigan 48640-1967(US)**

(72) Inventor: **Burba III, John Leslie, 168 Dallas, Angleton Texas 77551(US)**

(74) Representative: **Casalonga, Axel et al, BUREAU D.A. CASALONGA - JOSSE Morassistrasse 8, D-8000 München 5(DE)**

EP 0 211 983 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention concerns a process for preparing a 3-layer crystalline $LiX \cdot 2Al(OH)_3 \cdot nH_2O$ in a macroporous ion exchange resin.

U.S. Patents 4,116,858 and 4,159,311 disclose that an ion exchange resin may be saturated with aqueous $AlCl_3$ solution and that reaction with $NH_4OH$ converts the $AlCl_3$ in situ to $Al(OH)_3$. This so-formed amorphous $Al(OH)_3$ is then reacted with LiX, where X is halide, at elevated temperature to form crystalline $LiX \cdot 2Al(OH)_3$ which is useful in selectively recovering $Li^+$ values from aqueous solutions, e.g., Li-containing brines.

U.S. Patents 4,116,856 and 4,221,767 disclose that improvements in the above discussed formation of crystalline $LiX \cdot 2Al(OH)_3$ are found by reacting amorphous $Al(OH)_3$, or crystalline hydrous alumina (e.g., norstrandite, bayerite, gibbsite or mixtures of these) with LiOH to form $LiOH \cdot 2Al(OH)_3 \cdot nH_2O$ which is then reacted with LiX to form the crystalline $LiX \cdot 2Al(OH)_3$, where X is halide.

Various forms of alumina, $Al_2O_3$, are known, some of which occur as natural minerals, some of which are hydrated, and some of which are crystalline. The Handbook of Chemistry shows the following:

| Name | Crystalline Form | M.P. °C |
|---|---|---|
| aluminum oxide, $Al_2O_3$ | hex. col. | 2050 |
| α-$Al_2O_3$, corundum | trig;col.cr,n | 2015 |
| γ-$Al_2O_3$,γ-alumina | wh.micro.cr.,n | tr.to alpha |
| $Al_2O_3 \cdot 3H_2O$,gibbsite, (hydrargillite) | monocl.,wh.cr. | tr.to $Al_2O_3 \cdot H_2O$ (Boehmite) |
| $Al_2O_3 \cdot 3H_2O$, bayerite | wh.micro.cr. | tr.to $Al_2O_3 \cdot H_2O$ (Boehmite) |
| aluminum oxide, $Al_2O_3 \cdot xH_2O$ | amor.wh.pwd. | -$xH_2O$,tr. to γ-$Al_2O_3$ |

Norstrandite is a crystalline hydrous alumina, as are gibbsite and bayerite.

The teachings in U.S. Patent 4,116,856 disclose that crystalline hydrous alumina (e.g., norstrandite and/or bayerite) dispersed in ion exchange resin is not converted back to its original $LiX \cdot 2Al(OH)_3 \cdot nH_2O$ form by treatment with LiX unless the hydrous alumina is first, or simultaneously, reacted with LiOH.

Surprisingly, the present invention shows that crystalline hydrous aluminas can be reacted directly with lithium salts to form crystalline lithium salt aluminates if the correct ranges of temperature and concentration are employed

Ion exchange resins in the base form which contain incorporated amounts of crystalline $Al(OH)_3$ of the gibbsite, bayerite or norstrandite variety are reacted with hot, i.e. about 70°C or higher concentrated LiX aqueous solutions to prepare 3-layer crystalline $LiX \cdot 2Al(OH)_3 \cdot nH_2O$ (where X is anion) without solubilizing the $Al(OH)_3$.

Specifically, the present invention concerns a process for preparing crystalline 3-layer $LiX \cdot 2Al(OH)_3 \cdot nH_2O$ in a macroporous ion exchange resin, which comprises:
reacting a composite of a macroporous ion exchange resin, which is in its base form and which contains crystalline $Al(OH)_3$ dispersed therein by mixing the said composite with hot, i.e. about 70°C or higher concentrated aqueous solution of LiX, where X is an anion;
thereby converting the crystalline $Al(OH)_3$ in the resin to crystalline 3-layer $LiX \cdot 2Al(OH)_3 \cdot nH_2O$.

Compounds made in accordance with the present process are useful in selectively removing $Li^+$ values from aqueous solution and are also useful in exchanging of the anion (X) with other anions in aqueous solution. Of special interest is the removal of $Li^+$ values from natural brines, e.g., Smackover brine, and from ore leachings, e.g., Spodumene ore.

Crystalline hydrous aluminas are reacted with lithium salts under the influence of elevated temperature and sufficient concentration to form lithium aluminates, designated here as $LiX \cdot 2Al(OH)_3 \cdot nH_2O$ where X is an anion characterized as an anion which will form acids when in molecular combination with hydrogen or will form salts when in molecular combination with metal ions. It will be understood, of course, that the lithium aluminates will normally contain some waters of hydration, designated as $nH_2O$ in the above formula. The anion may have a valence of 1, 2, or 3.

When the beginning hydrous alumina is amorphous, such as when freshly prepared by ammonia precipitation of $Al(OH)_3$ from an $AlCl_3$ solution, the reaction to form lithium aluminates may be done using relatively weak solutions of the lithium salt (up to about 10%) and at relatively low temperatures (e.g., 20°C–40°C), then when heated at, e.g., about 50°C or higher, the lithium aluminate becomes crystallized as a 3-layer crystal.

In accordance with generally accepted practice, all solution concentrations in this disclosure are percent by weight, unless noted otherwise.

However, when the beginning hydrous alumina is crystalline (such as bayerite, gibbsite, norstrandite, or boehmite), then the relatively low temperature treatment with lithium salt does not appear to form an appreciable amount (if any) of lithium aluminate within a reasonable length of time.

It has now been found, surprisingly, that when heated at elevated temperature of at least about 70°C, preferably about 85°C–120°C, the mixture of crystalline hydrous alumina and lithium salt forms lithium aluminate. Along with this higher temperature, it is necessary that the lithium salt solution be of a relatively high concentration, preferably above about 12%, most preferably above about 20% or may be at the saturation limit of the lithium salt, especially if it is only slightly soluble. The combination of high temperature and high concentration is particularly effective in forcing the lithium salt into the layers of the hydrous alumina crystals, which under the conditions of the present invention gives a crystallographic unit cell having three layers of lithium salt and three layers of hydrous alumina.

As used herein, the expression "3-layer" refers to the number of layers bounded on both sides by the aluminate layers into which the subject Li compounds are intercalated. It will be realized, of course, that the crystals of lithium aluminates are normally present as aggregates or stacks of a plurality of unit cells rather than each unit cell standing as a separate physical entity.

The lithium aluminates may have two crystal structures, e.g., those of 2-layer crystallographic unit cells and those of 3-layer crystallographic unit cells. The 3-layer lithium aluminates have a 3-fold screw axis oriented parallel to the c-axis of the lithium aluminate crystal, as determined by the x-ray crystal studies. Under the conditions of the present invention however only 3-layer unit cells are formed.

For purposes of discussion and description in this disclosure, 3-layer lithium aluminates are graphically illustrated as follows:

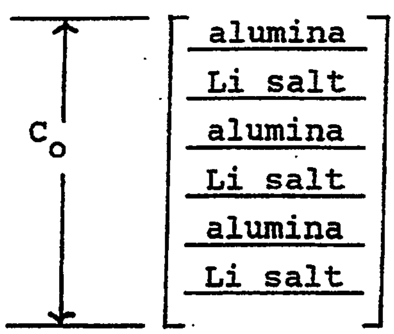


The heating of the mixture of an aqueous solution of lithium salt and hydrous alumina crystals may be performed in an open vessel, in a closed vessel, or at reflux. If performed in an open vessel where water vapor can escape, or if reduced pressure is applied to remove water vapor, the resulting increase in concentration of the lithium salt is beneficial in that the higher concentration tends to help drive the lithium salt into the alumina layers.

In those instances wherein water vapor is allowed to escape, a low concentration (generally less than about 10%) lithium salt may be employed at the outset, then the increase in concentration which results from water loss can be sufficient to drive the lithium salt into the hydrous alumina.

The preferred lower ratio of lithium salt to hydrous alumina, $Al(OH)_3$, in the mixture is about 0.5 moles of Li to 1 mole of Al. The upper limit of Li to Al is the saturation point of the lithium salt solution.

The lithium salts for reaction with the hydrous alumina can be at least one of the group exemplified by LiCl, LiBr, LiI, $LiNO_3$, $LiClO_4$, LiClO, LiSCN, LiOOCH, $LiC_2H_3O_2$, and the like. Stated another way the X in LiX may be any anion of a halo acid (excluding F), a mineral acid or inorganic acid, or an organic acid which is stable under reaction conditions. Virtually any water soluble lithium salt would be expected to be within the purview of this invention so long as the anion is not so large as to preclude entering the interstices of the alumina crystal.

Reaction of lithium salt with some forms of hydrous alumina, such as bayerite or norstrandite, produces 3-layer lithium aluminates. In contrast to the 2-layer $LiCl{\bullet}2Al(OH)_3{\bullet}nH_2O$ crystal, the 3-layer $LiCl{\bullet}2Al(OH)_3{\bullet}nH_2O$ crystal, whether in neat form or supported on or within a substrate, is stable in $H_2O$ if there is as much as about 50 ppm $Li^+$ in the solution. The 3-layer $LiOH{\bullet}2Al(OH)_3{\bullet}nH_2O$, formed by reacting the 3-layer $LiX{\bullet}2Al(OH)_3{\bullet}nH_2O$ with LiOH, can be neutralized with an acid to form 3-layer lithium aluminate containing anions of the acid. The porous substrate into which the crystalline hydrous alumina can be loaded may be an inert material, such as an inorganic or organic material. For certain uses and reasons, the substrate is preferably a macroporous resin such as an ion exchange resin as taught in U.S. Patents 4,116,858 and 4,116,856.

In the preparation of composites of lithium aluminates in ion exchange resins it is found that the use of hot, concentrated LiX (where X is halide or other anion) to convert crystalline $Al(OH)_3$ to crystalline $LiX{\cdot}2Al(OH)_3{\cdot}nH_2O$ can give somewhat different results, depending on the form of the resin and the crystalline form of the $Al(OH)_3$. In the absence of a substrate, such as an ion exchange resin, the treatment with hot, concentrated LiX aqueous solution yields 3-layer crystalline $LiX \cdot 2Al(OH)_3 \cdot nH_2O$ if the crystalline $Al(OH)_3$ is of the bayerite or norstrandite variety, but the treatment yields 2-layer crystalline $LiX \cdot 2Al(OH)_3 \cdot nH_2O$ if the crystalline $Al(OH)_3$ is of the gibbsite variety. If the $Al(OH)_3$ is amorphous, then the treatment yields 3-layer crystalline $LiX \cdot 2Al(OH)_3 \cdot nH_2O$. If the substrate is an inert material, having no ion exchange capability of its own, then the treatment yields the same results as if no substrate is used. If the substrate is an ion exchange resin in its acid form, such as DOWEX MWA-1-Cl ion exchange resin, then the treatment still gives 3-layer crystalline $LiX \cdot 2Al(OH)_3 \cdot nH_2O$ from bayerite or norstrandite and gives 2-layer crystalline $LiX \cdot 2Al(OH)_3 \cdot nH_2O$ from gibbsite. If, however, the resin is in its base form, e.g., DOWEX MWA-1-OH ion exchange resin, then bayerite or norstrandite yields 3-layer crystals and gibbsite also yields 3-layer crystals of $LiX \cdot 2Al(OH)_3 \cdot nH_2O$. It appears that having the resin in its base form causes the crystalline $Al(OH)_3$, even the gibbsite variety, to become solubilized to an extent which causes the resultant treatment with hot concentrated LiX to yield 3-layer crystals of $LiX \cdot 2Al(OH)_3 \cdot nH_2O$.

The examples which follow are to illustrate a particular embodiment; the invention is not limited to the particular embodiment illustrated, but is limited only by the claims.

Example 1 (reference example)

A 200-ml portion of a macroporous ion exchange resin in bead form (DOWEX MWA-1-Cl, a Trademark of The Dow Chemical Company) containing gibbsite within its pores is mixed and reacted with about 500 ml of 20% LiCl solution at about 105°C under reflux for about 2–3 hours. The reaction product obtained is 2-layer $LiCl \cdot 2Al(OH)_3 \cdot nH_2O$ as determined by x-ray diffraction data.

Example 2 (reference example)

A 200-ml portion of the same resin as in Example 1 above, but containing bayerite within its pores, is mixed and reacted with about 500 ml of 20% LiCl aqueous solution at about 105°C under reflux for about 2–3 hours. The reaction product obtained is 3-layer $LiCl \cdot 2Al(OH)_3 \cdot nH_2O$ ad determined by x-ray diffraction data.

Example 3 (reference example)

About 200 ml of the same resin as above, but containing norstrandite within its pores, is refluxed with about 500 ml of 20% LiCl aqueous solution for about 2–3 hours. The reaction product obtained is 3-layer $LiCl \cdot 2Al(OH)_3 \cdot nH_2O$ as determined by x-ray diffraction data.

Example 4 (reference example)

A composite of 2-layer lithium aluminate/resin is prepared by mixing and reacting DOWEX MWA-1-Cl ion exchange resin, containing gibbsite in the pores, with a 20% aqueous solution of LiCl at about 105°C. The composite is prepared for use as a $Li^+$ value absorber by substantially "unloading" (i.e., regenerating) $Li^+$ values from the crystal by washing it with a 1000 ppm $Li^+$ solution at 90°C. The so-regenerated composite is useful for extracting $Li^+$ values from a $Li^+$-containing natural brine (Smackover brine) until the 2-layer crystal is again loaded with $Li^+$ values. Regeneration with 1000 ppm $Li^+$ solution at 90°C creates no gibbsite, indicating the 2-layer crystal remains intact. In contrast thereto, regenerating with water containing no $Li^+$ values, or containing only about 300 ppm $Li^+$ values causes degeneration of the 2-layer crystal to gibbsite, which contaminates the Li-containing effluant from the wash column.

Example 5

This example demonstrates the synthesis of a base form of macroporous ion exchange resin composite containing 3-layer crystalline $LiCl \cdot 2Al(OH)_3 \cdot nH_2O$ wherein the 3-layer aluminate crystal is derived from crystalline $Al(OH)_3$, instead of amorphous $Al(OH)_3$, using a procedure which does not solubilize the crystalline $Al(OH)_3$.

A 200 ml portion of DOWEX MWA-1-OH ion exchange resin containing about 3.28 mmoles (per ml of resin) of $Al(OH)_3$, gibbsite, is placed in about 200 ml of concentrated LiCl aqueous solution (about 5M conc.). The mixture is placed in an 80°C oven for about 48 hours. The $Al(OH)_3$ is completely converted

to 3-layer crystalline LiCl • 2Al$(OH)_3$ • $nH_2O$ with no loss of $Al(OH)_3$ into the liquid phase. Also, there is no apparent breakage of the resin and the solution remains clear.

## Claims

1. A process for preparing crystalline 3-layer LiX • 2Al$(OH)_3$ • $nH_2O$ in a macroporous ion exchange resin, characterized by
reacting a composite of a macroporous ion exchange resin, which is in its base form and which contains crystalline $Al(OH)_3$ dispersed therein by mixing the said composite with an at least 70°C hot, concentrated aqueous solution of LiX, where X is an anion;
thereby converting the crystalline $Al(OH)_3$ in the resin to crystalline 3-layer LiX • 2Al$(OH)_3$ • $nH_2O$.

2. The process of Claim 1 wherein the crystalline $Al(OH)_3$ is of the gibbsite and/or bayerite and/or norstrandite variety.

3. The process of Claim 2 wherein the crystalline $Al(OH)_3$ is of the gibbsite variety.

4. The process according to any of Claims 1–3 wherein the hot LiX aqueous solution is at a temperature in the range of about 85°C to about 120°C.

5. The process according to any of Claims 1–4 wherein the concentration of the LiX in the aqueous solution is at least about 20% or the saturation concentration by weight.

6. The process according to any of Claims 1–4 wherein the LiX in the aqueous solution is LiCl and the concentration of the LiCl solution is at least about 8% by weight.

7. The process according to any of Claims 1–4 wherein the ratio of lithium salt to hydrous alumina, $Al(OH)_3$, in the mixture is about 0.5:1 (mole Li/mole Al) to the saturation point of the Li salt solution.

8. The process according to any of Claims 1–5 and 7 wherein X is the anion of a halo acid (excluding F), a mineral acid, an inorganic acid, or an organic acid, providing it is stable under the reaction conditions and not so large as to preclude entering the interstices of the alumina crystal.

## Patentansprüche

1. Verfahren zur Herstellung von kristallinem 3-Schichten LiX • 2Al$(OH)_3$ • $nH_2O$ in einem makroporösen Ionenaustauscherharz, gekennzeichnet durch
Umsetzen eines Verbundstoffes aus einem makroporösen Ionenaustauscherharz, das in seiner Basenform ist und das kristalline $Al(OH)_3$ dispergiert darin enthält, durch Mischen des Verbundstoffes mit einer mindestens 70°C heißen, konzentrierten wäßrigen Lösung von LiX, worin X ein Anion ist;
wodurch der kristalline $Al(OH)_3$ in dem Harz in kristallines 3-Schichten LiX • 2Al$(OH)_3$ • $nH_2O$ überführt wird.

2. Verfahren nach Anspruch 1, worin das kristalline $Al(OH)_3$ von der Gibbsit- und/oder Bayerit- und/oder Norstrandit-Modifikation ist.

3. Verfahren nach Anspruch 2, worin das kristalline $Al(OH)_3$ von Gibbsit-Modifikation ist.

4. Verfahren nach einem der Ansprüche 1 bis 3, worin die heiße, wäßrige LiX-Lösung eine Temperatur im Bereich von ungefähr 85°C bis ungefähr 120°C hat.

5. Verfahren nach einem der Ansprüche 1 bis 4, worin die Konzentration des LiX in der wäßrigen Lösung mindestens ungefähr 20% oder die Sättigungskonzentration, bezogen auf das Gewicht beträgt.

6. Verfahren nach einem der Ansprüche 1 bis 4, worin das LiX in der wäßrigen Lösung LiCl ist und die Konzentration der LiCl-Lösung mindestens ungefähr 8 Gew.-% ist.

7. Verfahren nach einem der Ansprüche 1 bis 4, worin das Verhältnis von Lithiumsalz zu wasserhaltigem Aluminiumoxid, $Al(OH)_3$, in der Mischung von ungefähr 0,5:1 (Mol Li/Mol Al) bis zum Sättigungspunkt der Li-Salz-Lösung ist.

8. Verfahren nach einem der Ansprüche 1 bis 5 und 7, worin X das Anion einer Halogensäure (ausgenommen F), einer Mineralsäure, einer anorganischen Säure oder einer organischen Säure ist, vorausgesetzt, es ist stabil bei den Reaktionsbedingungen und nicht so groß, daß Eindringen in die Zwischenräume des Aluminiumoxid-Kristalls ausgeschlossen ist.

## Revendications

1. Procédé de préparation de LiX • 2Al$(OH)_3$ • $nH_2O$ à 3 couches cristallisé dans une résine échangeuse d'ions macroporeuse, caractérisé en ce que
on fait réagir un composite d'une résine échangeuse d'ions macroporeuse, sous sa forme base et contenant $Al(OH)_3$ cristallisé en dispersion par mélange dudit composite avec une solution aqueuse concentrée, chauffée à au moins 70°C, de LiX, où X est un anion;
pour transformer ainsi le composé $Al(OH)_3$ cristallisé dans la résine en LiX • 2Al$(OH)_3$ • $nH_2O$ à 3 couches cristallisé.

2. Procédé selon la revendication 1, dans lequel le $Al(OH)_3$ cristallisé est du type gibbsite et/ou bayerite et/ou norstrandite.

3. Procédé selon la revendication 2, dans lequel le $Al(OH)_3$ cristallisé est du type gibbsite.

4. Procédé selon l'une quelconque des revendications 1 à 3, dans lequel la solution aqueuse chaude de LiX est à une température de l'ordre d'environ 85°C à environ 120°C.

5. Procédé selon l'une quelconque des revendications 1 à 4, dans lequel la concentration de LiX dans la solution aqueuse est au moins d'environ 20% en poids ou la concentration à saturation.

6. Procédé selon l'une quelconque des revendications 1 à 4, dans lequel LiX en solution aqueuse est LiCl, et la concentration de la solution de LiCl est d'au moins environ 8% en poids.

7. Procédé selon l'une quelconque des revendications 1 à 4, dans lequel le rapport du sel de lithium à l'alumine hydratée, $Al(OH)_3$, dans le mélange est d'environ 0,5:1 (mole Li/mole Al) jusqu'au point de saturation de la solution de sel de Li.

8. Procédé selon l'une quelconque des revendications 1 à 5 et 7, dans lequel X est l'anion d'un halogénoacide (à l'exclusion de F), d'un acide minéral, d'un acide inorganique, ou d'un acide organique, sous réserve qu'il soit stable dans les conditions de réaction et qu'il ne soit pas volumineux au point de ne pouvoir entrer dans les interstices du cristal d'alumine.